(19) Europäisches Patentamt / European Patent Office / Office européen des brevets

(11) **EP 2 871 547 B1**

(12) **EUROPEAN PATENT SPECIFICATION**

(45) Date of publication and mention
of the grant of the patent:
**08.01.2020 Bulletin 2020/02**

(51) Int Cl.:
***G05B 19/4065*** (2006.01)

(21) Application number: **14192134.6**

(22) Date of filing: **06.11.2014**

(54) **Real-time numerical control tool path adaptation using force feedback**

Numerische Echtzeit-Steuergerät-Pfadanpassung mit Kraftrückkoppelung

Adaptation de chemin d'outil de commande numérique en temps réel au moyen de rétroaction de force

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.11.2013 US 201361901014 P
10.02.2014 US 201414176492**

(43) Date of publication of application:
**13.05.2015 Bulletin 2015/20**

(73) Proprietor: **The Boeing Company
Chicago, IL 60606-1596 (US)**

(72) Inventors:
• **Bolin, Jared L.
Chicago, Illinois 60606-2016 (US)**
• **Easley, Samuel J.
Chicago, Illinois 60606-2016 (US)**
• **Xu, Liangji
Chicago, Illinois 60606-2016 (US)**

(74) Representative: **Howson, Richard Giles Bentham
et al
Kilburn & Strode LLP
Lacon London
84 Theobalds Road
London WC1X 8NL (GB)**

(56) References cited:
**EP-A2- 1 475 683      WO-A1-2013/088849
US-A- 4 802 095       US-A1- 2007 179 661
US-A1- 2011 106 292**

## Description

BACKGROUND

This disclosure generally relates to milling machines controlled by numerical control systems. In particular, this disclosure relates to milling machine control systems which utilize cutting tool paths calculated to maintain machining conditions within machining process constraints.

Many parts are created by machining a workpiece to remove material. In particular, industries that have many specialized parts often create parts by machining them rather than incurring capital expenditures to create the parts using other methods, such as by casting the parts using a mold. In other situations, machining a part (hereinafter "workpiece") may be necessary to finish a surface in accordance with a particular specification. For example, in the aerospace industry, machined parts typically have to adhere to design tolerances having small ranges for variance, and thus require precise manufacturing, which often includes a machining process when parts are formed from metal. The workpiece may be formed of virtually any material that may be machined including varieties of wood, metals, and composites.

One particular machining operation involves removing material using a milling tool, which removes material by cutting away at an engagement area on a workpiece as the milling tool rotates along an axis that is perpendicular to an engagement direction of the milling tool. Milling tools (or bits) efficiently remove undesired material from the surface of a workpiece to cut (i.e., mill) a desired shape into a raw piece of material (i.e., workpiece).

A milling machine typically comprises a movable table to which the workpiece is affixed. The table is capable of moving in two perpendicular directions (e.g., along X and Y axes). The table is coupled to one or more devices (e.g., lead screws) capable of translating shaft rotation of one or more servo motors into linear movement of the table. The movement of the table is therefore typically controlled by controlling the shaft rotation of the servo motors. The power supplied to each servo motor is typically regulated by corresponding servo amplifiers.

The table, and therefore the workpiece, is moved in a controlled manner relative to a cutting tool to enable the cutting tool to remove material from the workpiece to create the desired final product. The cutting tool typically attaches to a rotating shaft supported by a rotational bearing which is typically referred to as a spindle. The rotation of the spindle is driven by a spindle motor, with the power to the spindle motor being regulated by a corresponding spindle amplifier. The spindle, along with the cutting tool, may also be moved relative to the workpiece to further control the removal of material from the workpiece. For example, the spindle may be moved up and down relative to the plane on which the machine tool sits. To enable the movement of the spindle relative to the workpiece, the spindle may be connected to a lead screw, which is in turn connected to a servo motor. This up and down direction is the Z axis. While a typical three-axis (i.e., X, Y, and Z) milling machine using servo motors and lead screws is described above, many other configurations of milling machines exist. For example, milling machines may have five or more controlled axes. Additionally, milling machines may use electromagnetic linear drives, rather than servo motors and lead screws, to move the table and the workpiece.

The rotation of all the servo motors are precisely controlled and coordinated to produce the desired movement of the workpiece relative to the cutting tool to create the desired finished shape. Additionally, the rotational speed of the spindle, and therefore the cutting tool, may also be controlled by controlling the rotational speed of the spindle motor. The servo and spindle motors and amplifiers are typically controlled by a special-purpose computer programmed to execute computer numerical control (CNC). In addition to controlling the trajectory of the workpiece relative to the cutting tool, the CNC controller also controls the speed (hereinafter "feed rate") at which the workpiece is moved relative to the cutting tool. The CNC controller is typically programmed to operate the machine tool at a specified feed rate selected to utilize the machine capability without damaging the cutting tool or the spindle, or exceeding workpiece accuracy requirements.

The movement of the workpiece relative to the cutting tool as the workpiece is being milled creates both a tangential force and a radial force on the cutting tool. A torque is generated by the tangential force multiplied by the cutting tool radius and a bending moment (termed radial load) is generated by the radial force multiplied by the cutting tool length. The torque and radial load are preferably kept below a predefined maximum to prevent damage to the cutting tool and/or spindle. The torque is typically monitored by monitoring the output power or current of the spindle amplifier. The radial load is typically monitored using strain gauges on the spindle structure.

Circumstances may exist where the movement of the workpiece relative to the cutting tool at the programmed feed rate while the workpiece is being milled produces excessive torque and/or excessive radial loading. Adaptive control systems have been developed to react to the occurrence of such circumstances. Adaptive control systems typically repeatedly monitor the spindle power and the radial load as the workpiece is being milled. If the power and/or the radial load exceed a respective predefined maximum, the adaptive control system will typically cause the feed rate to be reduced to correspondingly decrease the spindle power and/or radial load. The adaptive control system may be a separate device capable of communicating with the CNC, or may be a functional element (e.g., hardware and/or software) within the CNC.

Currently cutting tool paths are created with Computer Aided Manufacturing (CAM) software with an expected raw material location and size. However, some workpieces have inconsistent locations and dimensions. For example, forging surfaces on machines do not match the CAD/CAM environment. Forgings typically have a tolerance on surfaces of 0.635 cm (±0.25 inch). Also forging quality diminishes over time due to die wear. Distortion of forgings results from forging process stresses. Misalignment on the machining center table may also be a problem.

For workpieces that have inconsistent raw material conditions (such as forgings, which can vary widely in size), the defined cutting tool path may encounter raw material depths that also vary widely, which is not optimal for a cutting tool. This variance in raw material can result in unexpected depths of cut that exceed machining constraints and/or result in tool breakage. Some commonly used machining constraints include radial cutting depth (also referred to herein as "radial depth of cut"), cutting force, spindle power, and spindle torque. Control of process constraints (including cutting tool wear) in some situations is possible by modification of the feed rate during the machining process. The feed rate of the cutting process can be modified to increase/decrease cutting forces to maintain process parameters within specified constraints, but feed rate modification may result in selection of an inefficient chip thickness.

In accordance with one feed rate optimization method, feed rate optimization of CNC programs can be performed during CNC programming processing in the CAM system. With this method, cutting conditions and depth of cut can be identified using a machining simulation that includes material removal modeling. The feed rate changes are based on the simulation. This method has to be completed with each CNC program change. Also this method requires that an accurate raw material model be available in the CAM system. This method does not work well for inconsistent forgings.

In accordance with another feed rate optimization method, feed rate optimization of CNC programs can be performed during the machining process in a control loop. In accordance with this method, sensors are used to identify cutting conditions and the feed rate is adjusted to maintain process constraints during CNC operation. Using this method, feed rates can be adjusted to compensate for tool wear and forging inconsistencies. One commercially available system receives the settings from the CNC program and monitors the spindle load. If the spindle load falls below the set point, the system increases the cutting feed rate of the CNC. If the spindle load increases above the set point, the system decreases the cutting feed rate of the CNC. Another commercially available system adjusts feed rates based on the current cutting conditions (volume of material being removed, depth, width, and angle of cut) for each segment of the tool path.

The major drawback to feed rate optimization methods is that, since the tool path is specified, only cutting feed rate can be altered, not tool path locations (to increase/decrease radial cutting depth). When machining hard materials, the effective chip thickness is approximately 0.0762-0.1524 mm (0.003-0.006 inch). Cutting above and below this range is considered inefficient. When cutting below the efficient range, metal removal rates are decreased while minimal increases in cutting tool life are gained. This is mostly due to the rubbing effect that begins to occur as the chip thickness approaches the cutting edge radius. This rubbing effect leads to uneven and premature wear of the cutting tool. When cutting above the efficient range, tangential cutting forces exerted on the cutting tool approach the mechanical limits of the cutting tool material, resulting in chipping and breakage.

An alternative method for adjusting for inconsistent or unknown raw material location includes measuring the raw material, digitizing the result, and loading the raw material location information into a CAD/CAM system that calculates tool paths. The CAM software will create a CNC program for commanding the cutting tool to follow the calculated tool path. In one embodiment, the radial cutting depth is controlled based on a digital forging definition. The forging can be defined using a force feedback probing system or reverse engineering equipment for scanning.

It is known to assume a specified (e.g., 1-inch) offset margin on all forging surfaces. Cutters recognize this offset as material, resulting in air cutting. Air cutting refers to moving a cutting tool at a "cutting" feed rate without cutting material. This is typically quite slow, e.g., 5.08-20.32 cm (2-8 inches) per minute. Other positioning moves are made fast, e.g., 7.62-20.32 m (300-800 inches) per minute, because there is no chance for collision or cutting. If a safety offset margin is assumed to represent where unknown material may be located, there will be situations where there is no material despite the assumption that material may be there. In these areas where air cutting occurs, a cutting feed rate is used but no material is cut. A typical titanium roughing feed rate is 6.35 cm (2.5 inches) per minute with a 7.62-centimetre-diameter (3-inch-diameter) cutting tool. Thus one "air cutting" pass around a 508-centimetre (200-inch) forging can take 190 minutes, resulting in a significant increase in runtime.

Although a CAD/CAM calculation process provides better tool life and better metal removal performance than that provided by the adaptive feed rate method, the CAD/CAM calculation adds engineering time to production operations and is typically only used on limited-quantity parts.

It would be desirable to provide a milling methodology which is an improvement over the methodologies described above.

European patent application number 1475683 discloses an end-mill machining control method and apparatus in which cutting forces tangential and normal to tool motion are detected and machining is controlled based on the detected cutting force values.

US patent number 4802095 discloses a system for measuring tool wear of a rotating end mill.

US patent application number 2007/0179661 discloses a method for calculating depth of cut without any milling self-excited vibration.

International patent application number 2013/088849 discloses a method for allowing the use of a constant malfunction detection threshold value even in processing paths in which the depth of cutting changes from moment to moment.

US patent application number 2011/0106292 discloses a machine implement including sensors that measure a force imparted by the machine implement to a structure during a machining process.

SUMMARY

In a first aspect there is provided a method as defined in claim 1, and in a second aspect there is provided a milling machine as defined in claim 8.

The subject matter disclosed herein is directed to a system having the ability to modify the cutting tool path in order to control the radial cutting depth in real-time during a machining process to maintain machining process constraints. Since the process is performed in a control loop at the CNC machine, increases in cutting force can be captured by sensors on the machine as tool wear progresses, triggering an appropriate action. Examples of an appropriate action include: increasing or reducing radial cutting depth and/or cutting tool replacement, followed by resumption of the cutting process. The disclosed method produces consistent machining forces and maintains the chip thickness within a range of effective values during the machining operation, resulting in optimum cutting tool life and minimal cost.

The method of CNC cutting tool path adaptation disclosed in detail below uses a CNC controller and a force feedback loop for maintaining machining conditions within machining process constraints. Using part information, initial path, and trajectory, a tool path is initialized and the cutting process begins. During the process, machine sensors are utilized to identify machining conditions and modify the cutting tool path to change radial cutting depths and maintain machining process force constraints. This method allows efficient machining operations on raw material having inconsistent dimensions, such as forgings. In particular, making the tool path adaptive based on cutting force eliminates the need to assume an offset margin on all forging surfaces, thereby reducing runtime. This machining method has the potential to reduce the cost of machining large components (such as aircraft components) made of hard metal (such as titanium and stainless steel).

One aspect of the subject matter disclosed herein is a method for machining a workpiece using a cutting tool attached to a spindle. The method comprises: (a) defining an initial tool path of the cutting tool relative to a workpiece using part definition data; (b) causing the cutting tool to cut along the defined initial tool path relative to the workpiece; (c) receiving sensor data representing machining process conditions during the cutting along the defined initial tool path; (d) processing the sensor data to determine a value of a machining process force parameter; and (e) causing the cutting tool to cut along a modified tool path relative to the workpiece such that the radial cutting depth changes and values of the machining process force parameter does not exceed a machining process force constraint. Operations (b) through (e) are performed by a computer system. In alternative implementations, the machining process force parameter is cutting force of the cutting tool or spindle power. Operation (e) may comprise causing the cutting tool or the workpiece to move relative to each other so that the cutting tool or the workpiece moves in a direction which is normal to a current direction of movement.

The method described in the preceding paragraph may further comprise: detecting a level of chatter and then determining whether the detected chatter level exceeds a specified stability constraint. In accordance with one embodiment, the cutting tool cuts along a modified tool path relative to the workpiece such that the radial depth of cut decreases in response to detection of a chatter level exceeding the specified stability constraint. In accordance with another embodiment, the method further comprises replacing the cutting tool in response to detection of a chatter level exceeding the specified stability constraint.

Another aspect of the subject matter disclosed herein is a milling machine comprising: a rotatable spindle; a first motor for driving rotation of the spindle; a cutting tool attached to the spindle; a support table, the spindle and the support table being movable relative to each other; second and third motors for moving the spindle and the support table relative to each other along first and second axes respectively; one or more sensors for producing feedback signals representing values of one or more machining process parameters; and a computer system operatively coupled to receive the feedback signals from the one or more sensors and to send command signals to the first through third motors. The computer system is programmed to perform the following operations during machining of a workpiece that has been attached to the support table: (a) controlling the second and third motors so that the cutting tool cuts along a defined initial tool path relative to the workpiece; (b) receiving feedback signals from the one or more sensors during cutting along the defined initial tool path; (c) processing the feedback signals to determine a value of a machining process force parameter; and (d) controlling the second and third motors so that the cutting tool cuts along a modified tool path relative to the workpiece, wherein the modified tool path results in changes to the radial cutting depth and values of the machining process force parameter which do not exceed a machining process force constraint.

A further aspect is a method for CNC cutting of an inconsistent material preform, comprising: (a) defining an initial tool starting location and initial tool trajectory relative to a preform using part definition data; (b) placing a cutting tool at the initial tool starting location; (c) rotating the cutting tool; (d) while the cutting tool is rotating, moving one of the cutting tool and the preform relative to the other so that the cutting tool cuts along the initial tool trajectory; (e) while one of the cutting tool and the workpiece is moving relative to the other, sensing machining conditions; and (f) while the machining conditions are being sensed, adjusting the tool path so that the cutting tool follows a trajectory different than the initial tool trajectory and the radial cutting depth changes, the adjustment being calculated to maintain a machining condition within a machining process force constraint.

Other aspects are disclosed in detail and claimed below.

BRIEF DESCRIPTION OF THE DRAWINGS

FIG. 1 is a diagram representing a CAD model nominal surface of a forging.

FIG. 2 is a diagram showing an isometric view of a spindle of a CNC milling machine that is carrying a cutting tool, which is being operated to form a pocket in a workpiece.

FIG. 3 is a diagram showing the geometry of a contact area (see hatching) between a workpiece and a cutting tool during a typical milling operation.

FIG. 4 is a diagram representing forces exerted on a cutting tool engaging a workpiece with a radial depth of cut much less than 50%.

FIG. 5A is a diagram representing a situation wherein a rotating cutting tool is engaging a workpiece as the cutting tool moves in a straight line.

FIG. 5B is a diagram representing a situation wherein a rotating cutting tool is engaging a workpiece as the cutting tool changes direction by 90° at a corner.

FIG. 6 is a diagram representing a rotating cutting tool following a tool path that changes as a function of conditions during machining of a workpiece while maintaining a machining process force constraint.

FIG. 7 is a block diagram representing some hardware and software components of a system for adaptive tool path milling of a workpiece in accordance with one embodiment.

FIG. 8 is a block diagram representing some hardware components of a system for adaptive tool path milling of a workpiece in accordance with another embodiment.

FIG. 9 is a flow diagram of an aircraft production and service methodology.

FIG. 10 is a block diagram showing systems of an aircraft.

Reference will hereinafter be made to the drawings in which similar elements in different drawings bear the same reference numerals.

DETAILED DESCRIPTION

End mills are cutting tools for machining work pieces and are typically engaged to a rotary turning machine such as a milling machine. The milling machine rotatably drives the end mill to shape the workpiece. End mills are typically provided as elongate, cylindrically shaped elements and may include anywhere from 2 to 20 or more teeth or flutes that are formed on an outer perimeter of the end mill. As distinguished from drill bits which are typically used for forming holes in an axial direction, end mills can be used for shaping work pieces in all directions including, without limitation, axial (i.e., vertical), lateral (i.e., sideways) and angular directions.

Each flute of the end mill is configured to remove a small amount of material (referred to herein as a "chip") as the end mill is rotatably driven relative to the workpiece. The term "chip thickness" refers to the thickness of material that each flute on the cutting tool removes at a certain position. End mills may be engaged at one end to a chuck or collet of a spindle which may be movable in vertical, lateral and/or angular orientations depending upon the capabilities of the milling machine (i.e., whether the milling machine is 2-axis, 3-axis, 5-axis, etc.). End mills are typically fabricated of relatively hard materials, such as high-speed steel or tungsten carbide, to provide resistance against deflection and also to maintain the integrity of the cutting tool under load. Extremely hard coatings may be formed on the cutting teeth to allow the end mill to operate under high-temperature, high-pressure machining conditions and to increase the life of the end mill.

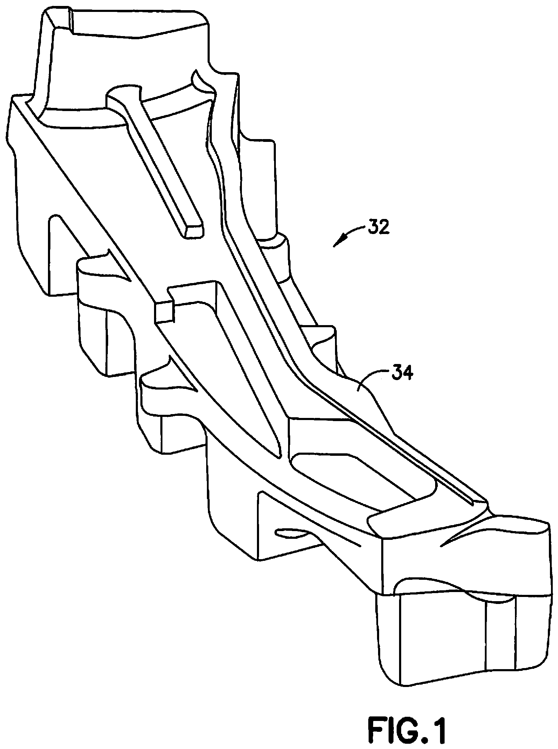

FIG. 1 is a diagram showing a representation of a CAD model nominal surface 34 of a forging 32 made of metal, e.g., titanium. Cutting tools (or bits) can efficiently remove undesired material from a workpiece to cut (i.e., mill) the desired shape shown in FIG. 1. A variety of grooves, slots, and pockets in the workpiece may be produced from a variety of tool bits

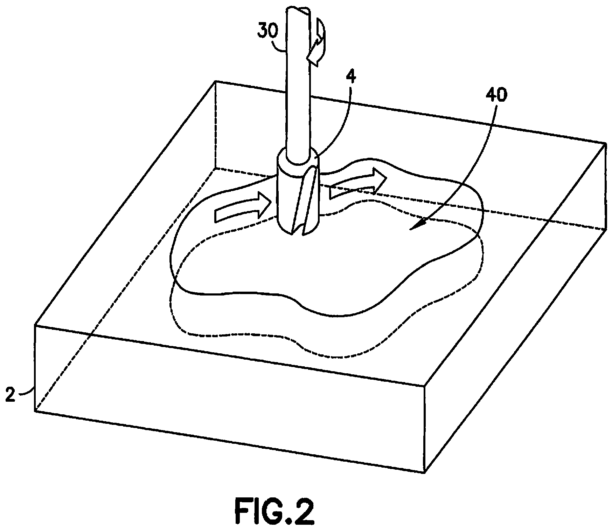

FIG. 2 illustrates a spindle 30 of a CNC milling machine (not shown) that is carrying a cutting tool 4 and is being operated to form a pocket 40 in a layer of material of a workpiece 2. The spindle 30 is rotated about its elongate axis so that the cutting tool 4 rotates, and the spindle 30 is driven along a tool path that is coplanar with the layer of material of workpiece 2 so that the rotating cutting tool 4 engages and cuts into the material (i.e., moves radially into the material). Stated differently, the material of workpiece 2 is fed into the cutting tool 4 due to movement of the spindle 30 along the tool path. Alternatively, the spindle 30 can be stationary and the workpiece 2 is moved relative to the spindle 30.

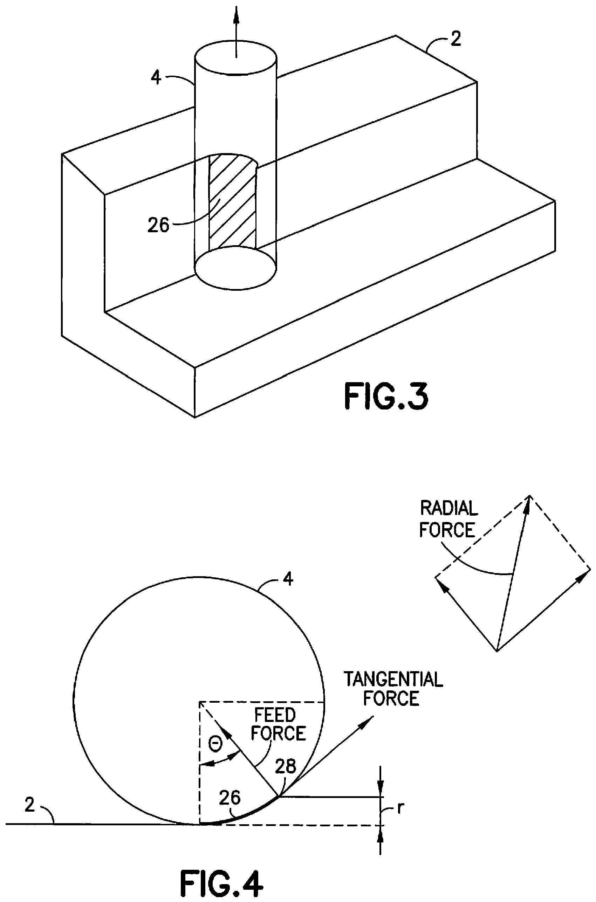

The flutes on the cutting tool 4 that are engaged with (i.e., contact) the material of workpiece 2 at any instant in time during a milling operation determine a so-called "contact area". FIG. 3 shows the geometry of a typical contact area 26 (see hatching) between a workpiece 2 and a cutting tool 4 during relative straight-line motion. The deeper the radial and/or axial depths of cut, the more the flutes (not shown in FIG. 3) will be engaged, thereby increasing the contact area 26, which in turn increases the cutting force required.

FIG. 4 shows a cutting tool 4 engaging a workpiece 2 with a radial depth of cut much less than 50%. The contact area 26 is indicated by a boldfaced arc that forms part of the circle representing the cutting tool 4. The angle $\theta$ is called the tool engagement angle (TEA), which is defined as the amount of sweep subtended by each cutting edge as it engages and leaves the material of the workpiece 2. At the intersection point 28 between the tool circumference and the workpiece edge, the tangential and feed forces exerted on the cutting tool 4 are indicated by respective arrows. The tangential force equals the spindle load. The radial force exerted on the cutting tool 4 is the vector sum of the feed and tangential forces. As the radial depth of cut $R_{DOC}$ is increased, the contact area 26 increases and the forces become larger.

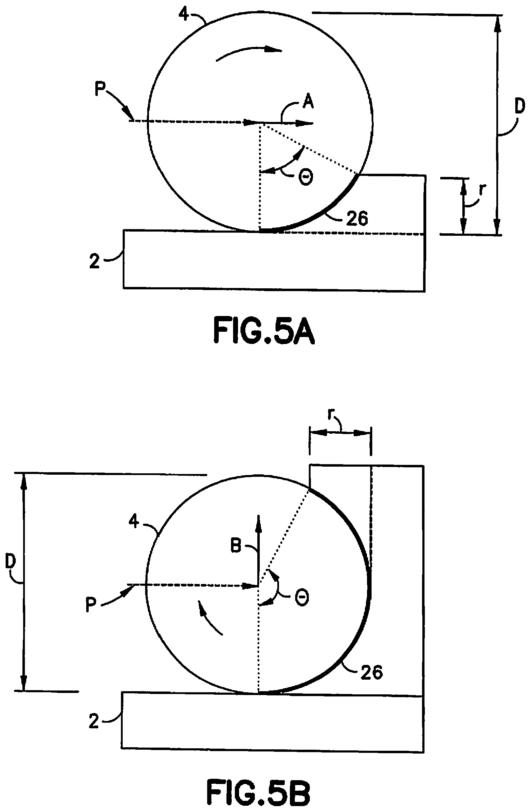

FIGS. 5A and 5B are diagrams showing representations of a rotating cutting tool 4 engaging a workpiece 2 as the cutting tool 4 is advancing in a straight line (the advancing direction is indicated by arrow A in FIG. 5A) and as the cutting tool 4 changes direction by 90° at a corner of the workpiece 2 (the advancing direction is indicated by arrow B in FIG. 5B). The past tool path P in each case is indicated by respective dashed lines in FIGS. 5A and 5B.

Still referring to FIGS. 5A and 5B, the radial depth of cut $R_{DOC}$ is the percentage of the tool diameter engaged with the material of the workpiece 2:

$$R_{DOC} = (r/D) \times 100\%$$

where $D$ is the diameter of the cutting tool 4, and $r$ is the depth (along its radius) of the cutting tool 4 in the workpiece 2 as it makes a cut. The radial depth of cut $R_{DOC}$ determines the material removal rate (MRR) and reflects the cutting forces, but only for straight-line motions. The tool engagement angle $\theta$ better reflects the cutting force regardless of the tool path shape. For straight-line motions, there is a direct, nonlinear relationship between tool engagement angle $\theta$ and radial depth of cut $R_{DOC}$. As should be apparent from FIGS. 5A and 5B, the radial depth of cut $R_{DOC}$ may be the same for two different tool engagement angles.

If the radial depth of cut $R_{DOC}$ is less than 100%, the tool is only partially engaged and is making a peripheral cut. If the radial depth of cut $R_{DOC}$ is 100%, the cutting tool is fully engaged and is making a slot cut. In turning and boring operations, a single-point tool cuts at a depth relative to the workpiece radius. A large radial depth of cut will require a low feed rate, or else it will result in a high load on the tool and reduce the tool life.

Methods are known for automatically generating milling tool paths that do not take into account the milling process conditions. In accordance with one known method, a CNC controller executes a software program that causes the cutting tool to follow a pre-processed tool path that has been configured to maintain the tool engagement angle $\theta$ constant. This known methodology does not work well for inconsistent forgings (i.e., forgings having inconsistent size and/or shape).

In contrast, the adaptive tool path milling process disclosed herein is able to modify the tool path in real time during a milling operation based on the sensed milling process conditions. The CNC controller calculates the tool path "on the fly". The radial depth of cut is modified based on force feedback from machine sensors. This methodology works well for inconsistent forgings.

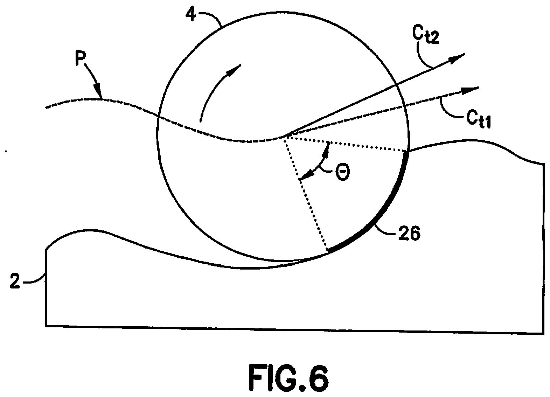

FIG. 6 is a representation of a rotating cutting tool 4 following a tool path P that changes as a function of conditions during machining of a workpiece 2. The dashed arrow $C_{t1}$ represents the tool advancing direction at a time $t_1$ prior to the tool path adjustment, while the solid arrow $C_{t2}$ represents the tool advancing direction at a time $t_2$ subsequent to the tool path adjustment. In accordance with the teachings herein, the tool path is modified in a manner that causes the radial depth of cut to change while values of a machining process force parameter (e.g., cutting force or spindle power) are maintained below a machining process force constraint. This process is hereinafter referred to as "adaptive tool path milling".

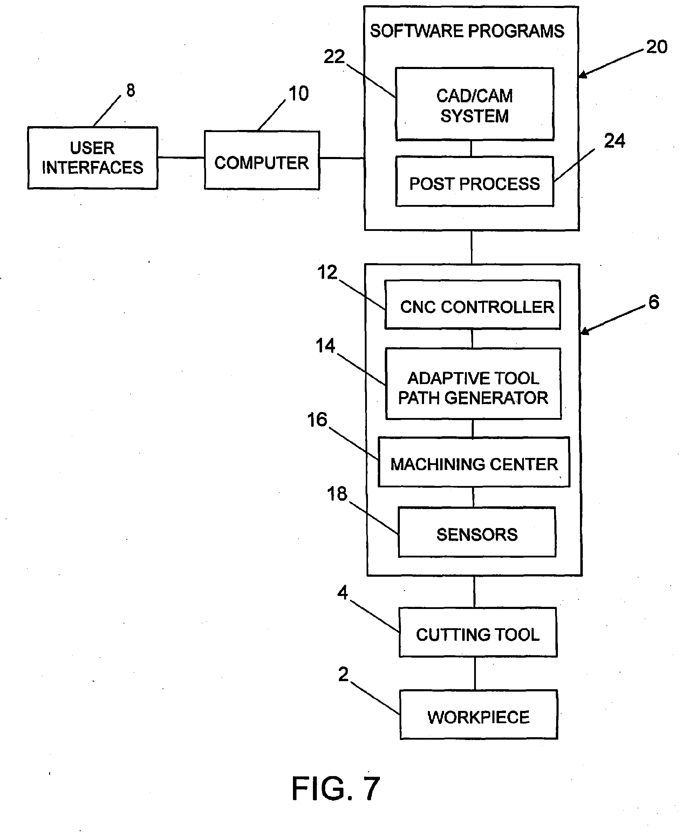

FIG. 7 identifies various hardware and software components of a system for adaptive tool path milling of a workpiece in accordance with one embodiment. The hardware components 6 comprise a machining center 16 (comprising a spindle for holding a cutting tool 4 and a support table for supporting a workpiece 2), a CNC controller 12 programmed to command the machining center 16 so that the cutting tool 2 will follow an tool path relative to a workpiece 2, and various sensors 18 for providing feedback to the CNC controller 12 concerning machining conditions.

The initial tool path for a machining operation is defined by a CNC program executed by the CNC controller 12. The CNC program for the initial tool path is generated by a computer 10 which can run software programs 20 in accordance with commands received via user interfaces 8. The software programs 20 include a CAD/CAM system 22 that calculates the initial tool path.

The post-processor 24 will create the CNC program for the initial tool path, which CNC program is loaded into the CNC controller 12.

In accordance with the teachings herein, the CNC controller 12 is further programmed with software that functions as an adaptive tool path generator 14. The adaptive tool path generator 14 receives the feedback from the sensors 18 and then adjusts the tool path in a manner that changes the radial depth of cut and maintains the values of a machining process force parameter (e.g., cutting force of the cutting tool or spindle power) below a specified machining process force constraint.

After loading the CNC program into the CNC controller 12, installing the cutting tool 4 in the spindle (not shown in FIG. 7) of the machining center 16, and fixedly attaching the workpiece 2 to the support table (not shown in FIG. 7), a machining operation can be initiated. The CNC controller 12 causes the cutting tool 4 to cut along the defined initial tool path relative to the workpiece 2. The adaptive tool path generator 14 receives sensor data from sensors 28 representing machining process conditions during cutting along the defined initial tool path. The adaptive tool path generator 14 processes the sensor data to determine a value of a machining process force parameter, such as cutting force of the cutting tool 4 or spindle power. The adaptive tool path generator 14 causes the cutting tool 4 to cut along a modified tool path relative to the workpiece 2 such that the radial cutting depth changes and values of the machining process force parameter do not exceed a machining process force constraint.

In accordance with one implementation, the CNC controller 12 and the adaptive tool path generator 14 may be embodied as respective computers or processors that communicate through a network or bus. In an alternative implementation, the CNC function and the adaptive tool path generation function may be respective software modules running on the same computer or processor. The generic term "computer system" (defined below) encompasses these and other configurations.

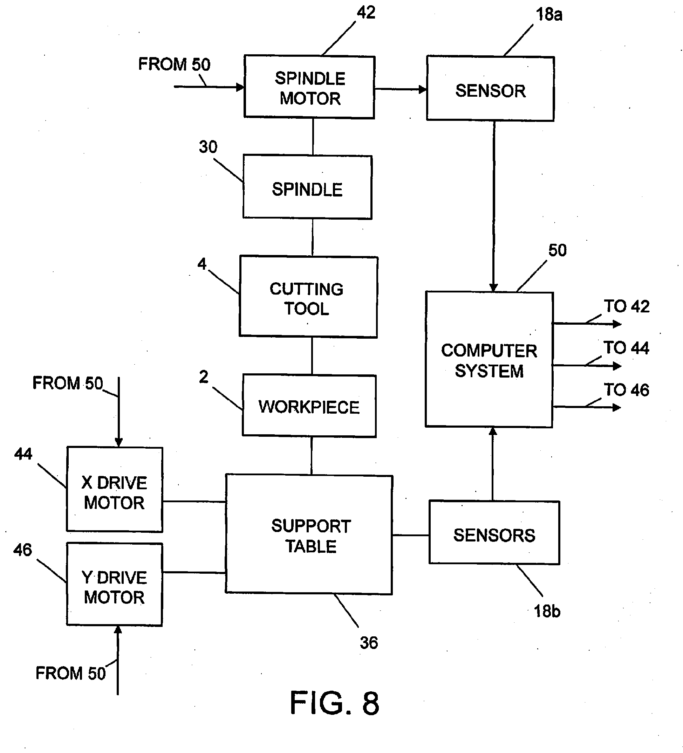

FIG. 8 identifies some hardware components of a system for adaptive tool path milling of a workpiece in accordance with another embodiment. The hardware components identified in FIG. 8 include a computer system 50 programmed to perform the CNC and adaptive tool path generation function. The hardware components further include a cutting tool 4 installed in a spindle 30 driven to rotate by a spindle motor 42 in accordance with commands received from the computer system 50; and a support table 36 driven to displace in X and Y directions by X and Y drive motors 44 and 46 which also operate in accordance with commands received from the computer system 50. A workpiece 2 is securely mounted on support table 36 and moves in conjunction therewith. Although not shown in FIG. 8, the hardware components may further include means for displacing the spindle 30 in a Z direction, allowing the computer system to adjust the axial depth of cut as appropriate.

The power being used by spindle 30 is measured by sensor 18a, while the X and Y coordinate position of the support table 36 are measured by sensors 18b. Sensor data digitally representing these measurements is fed back to the computer system 50 (via wireline or wireless communication channels). Sensor 18a may take the form of a dynamometer that measure torque and rotational speed of spindle motor 42 and then calculates the spindle power. Sensors 18b may take the form of respective force dynamometers which can be coupled to the support table 36 for measuring the cutting forces exerted by the cutting tool 4 on the workpiece 2 in the X and Y directions.

The computer system 50 is programmed to execute the following operations: (a) controlling the X and Y drive motors 44/46 so that the cutting tool 4 cuts along a defined initial tool path relative to the workpiece 2; (b) receiving feedback signals from sensors 18a and 18b during cutting along the defined initial tool path; (c) processing the feedback signals to determine a value of a machining process force parameter (e.g., spindle power or cutting forces in the X and Y directions); and (d) controlling the X and Y drive motors 44/46 so that the cutting tool 4 cuts along a modified tool path relative to the workpiece 2. The modified tool path is calculated to produce changes in radial depth of cut and values of the machining process force parameter which do not exceed a machining process force constraint.

The adaptive tool path milling process disclosed herein allows efficient machining operations on inconsistent raw material conditions, such as forgings. In addition to maintaining machining conditions during the cutting process, the adaptive tool path milling process disclosed herein monitors process constraints to identify cutting tool edge wear when machining hard materials. In response to real-time detection of cutting tool edge wear, the radial depth of cutting can be modified as the milling process continues. More specifically, the radial depth of cut is modified in a manner that produces a consistent machining force. In the alternative, if the degree of cutting tool edge wear is greater than a specified threshold, the cutting tool can be replaced.

The systems and processes described above allow the chip thickness during the machining operation to be maintained to an effective value, resulting in optimum cutting tool life and minimal cost. Another benefit is allowing a machining process to maintain a stability constraint. One common issue in machining processes is related to machine tool structure and cutting tool stability. When a certain stability threshold is exceeded, machining chatter is experienced, resulting in bad surface finish, poor tool life, and potential damage to the machine tool or part. This is caused by self-excited process-dependent chatter. The threshold can be identified using machining dynamics modeling and empirical testing of cutting tool stiffness. The threshold limits the cutting depths that can be achieved for stable (non-chatter) cutting. If this threshold is exceeded, reduction of feed rate cannot correct machining chatter to maintain a stable process. The threshold is a function of depth of cut, which can be increased for a single axial depth of cut by reducing the radial depth of cut. So using the systems and process disclosed herein, radial cutting depth can be decreased if cutting tool wear creates non-stable chattered cutting. Or the radial depth of cut can be increased until this threshold is found, resulting in cost-efficient machining processes. Non-stable chatter cutting can be identified by monitoring machine structure vibration, cutting force frequency, or audio devices. The monitoring encompasses acquiring electrical signals representing machine vibrations and then filtering out the cutting frequency (which may equal the tooth passing frequency of the cutting tool) and its harmonics. Chatter frequencies in the filtered signal can be identified using an algorithm (e.g., a Fast Fourier Transform) that converts amplitude to the frequency domain. This algorithm can be incorporated in the adaptive tool path generation software module executed by the computer system.

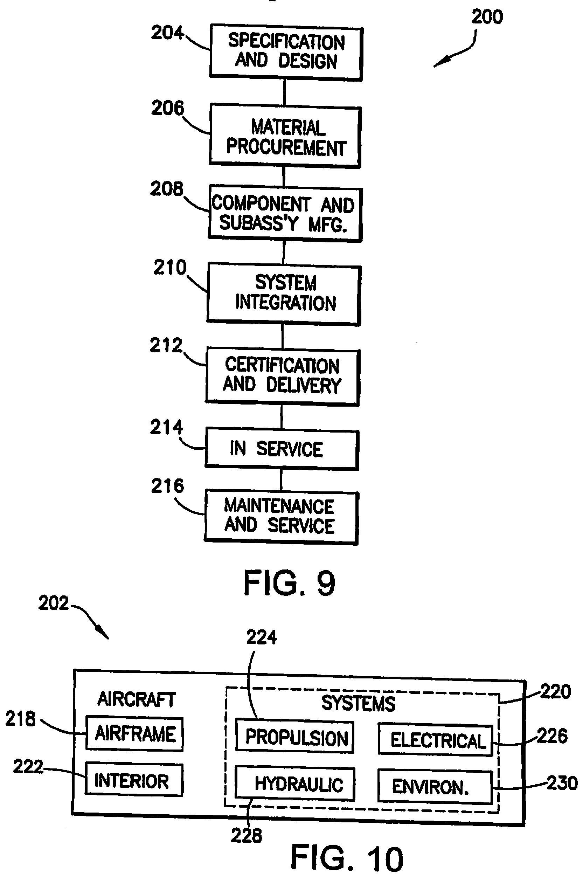

The milling apparatus and methodology disclosed above may be employed in an aircraft manufacturing and service method 200 as shown in FIG. 9 for assembling an aircraft 202 as shown in FIG. 10. During pre-production, exemplary method 200 may include specification and design 204 of the aircraft 202 and material procurement 206. During production, component and subassembly manufacturing 208 and system integration 210 of the aircraft 202 takes place. Component manufacturing includes, but is not limited to, milling operations of the type disclosed herein. After system integration 210, the aircraft 202 may go through certification and delivery 212 in order to be placed in service 214. While in service by a customer, the aircraft 202 is scheduled for routine maintenance and service 216 (which may also include modification, reconfiguration, refurbishment, and so on).

Each of the processes of method 200 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in FIG. 10, the aircraft 202 produced by exemplary method 200 may include an airframe 228 with a plurality of systems 220 and an interior 222. Examples of high-level systems 220 include one or more of the following: a propulsion system 224, an electrical system 226, a hydraulic system 228, and an environmental control system 230. Any number of other systems may be included. At least some of the systems 220 may comprise components machined using milling operations of the types disclosed herein.

One or more apparatus embodiments, method embodiments, or a combination thereof may be utilized during the component manufacturing stage 210. The use of adaptive tool path milling is valuable because of the potential cost savings for manufacturing aircraft components. Most significant cost savings would be due to reductions in runtime for milling large hard metal components, such as components made of titanium or stainless steel.

As used in the claims, the term "computer system" should be construed broadly to encompass a system having at least one computer or processor, and which may have multiple computers or processors that communicate through a network or bus. As used in the preceding sentence, the terms "computer" and "processor" both refer to devices having a processing unit (e.g., a central processing unit) and some form of memory (i.e., computer-readable medium) for storing a program which is readable by the processing unit.

The method claims set forth hereinafter should not be construed to require that the steps recited therein be performed in alphabetical order (alphabetical ordering in the claims is used solely for the purpose of referencing previously recited steps) or in the order in which they are recited. Nor should they be construed to exclude any portions of two or more steps being performed concurrently or alternatingly.

## Claims

1. A method for machining a workpiece (2) using a cutting tool (4) attached to a spindle (30), the method comprising:

    (a) defining an initial tool path of the cutting tool (4) relative to a workpiece (2) using part definition data;
    (b) causing the cutting tool (4) to cut along the defined initial tool path relative to the workpiece (2);
    (c) receiving sensor (18) data representing machining process conditions during said cutting along the defined initial tool path;
    (d) processing the sensor (18) data to determine a value of a machining process force parameter; and
    (e) causing the cutting tool (4) to cut along a modified tool path relative to the workpiece (2),

    wherein operations (b) through (e) are performed by a computer system (50); and
    causing the cutting tool to cut along a modified tool path relative to the workpiece changes the radial cutting depth during machining of the workpiece and ensures that values of the machining process force parameter does not exceed a machining process force constraint

**2.** The method as recited in claim 1, wherein the machining process force parameter is cutting force of the cutting tool (4).

**3.** The method as recited in claim 1 or claim 2, wherein the machining process force parameter is spindle power.

**4.** The method as recited in any preceding claim, wherein operation (e) comprises causing the cutting tool (4) or the workpiece (2) to move relative to each other so that the cutting tool (4) or the workpiece (2) moves in a direction which is normal to a current direction of movement.

**5.** The method as recited in any preceding claim, further comprising detecting a level of chatter and then determining whether the detected chatter level exceeds a specified stability constraint.

**6.** The method as recited in claim 5, wherein the cutting tool (4) cuts along a modified tool path relative to the workpiece (2) such that the radial depth of cut decreases in response to detection of a chatter level exceeding said specified stability constraint.

**7.** The method as recited in claim 5 or claim 6, further comprising replacing the cutting tool (4) in response to detection of a chatter level exceeding said specified stability constraint.

**8.** A milling machine comprising:

a rotatable spindle (30);
a first motor (42) for driving rotation of said spindle (30);
a cutting tool (4) attached to said spindle (30);
a support table (36), said spindle (30) and said support table (36) being movable relative to each other;
second and third motors (44 and 46) for moving said spindle (30) and said support table (36) relative to each other along first and second axes respectively;
one or more sensors (18) for producing feedback signals representing values of one or more machining process parameters; and
a computer system (50) operatively coupled to receive said feedback signals from said one or more sensors (18) and to send command signals to said first through third motors (42, 44 and 46), wherein said computer system (50) is programmed to perform the following operations during machining of a workpiece (2) that has been attached to said support table (36):

(a) controlling said second and third motors (44 and 46) so that said cutting tool (4) cuts along a defined initial tool path relative to the workpiece (2);
(b) receiving feedback signals from said one or more sensors (18) during cutting along the defined initial tool path;
(c) processing the feedback signals to determine a value of a machining process force parameter; and
(d) controlling said second and third motors (44 and 46) so that said cutting tool (4) cuts along a modified tool path relative to the workpiece (2), wherein the modified tool path results in changes to: the radial cutting depth during machining of the workpiece, and values of the machining process force parameter which do not exceed a machining process force constraint.

**9.** The milling machine as recited in claim 8, wherein the machining process force parameter is cutting force of the cutting tool (4).

**10.** The milling machine as recited in claim 8 or claim 9, wherein the machining process force parameter is spindle power.

**11.** The milling machine as recited in any one of claims 8 to 10, wherein operation (e) comprises causing the cutting tool (4) or the workpiece (2) to move relative to each other so that the cutting tool (4) or the workpiece (2) moves in a direction which is normal to a current direction of movement.

**12.** The milling machine as recited in any one of claims 8 to 11, further configured to detect a level of chatter and then determine whether the detected chatter level exceeds a specified stability constraint.

**13.** The milling machine as recited in claim 12, wherein the cutting tool (4) cuts along a modified tool path relative to the workpiece (2) such that the radial depth of cut decreases in response to detection of a chatter level exceeding said specified stability constraint.

**Patentansprüche**

**1.** Verfahren zum Bearbeiten eines Werkstücks (2) mit einem Schneidwerkzeug (4), das an einer Spindel (30) befestigt ist, wobei das Verfahren Folgendes aufweist:

(a) Definieren eines initialen Werkzeugwegs des Schneidwerkzeugs (4) bezüglich eines Werkstücks (2), das Teiledefinitionsdaten verwendet;
(b) Bewirken, dass das Schneidwerkzeug (4) entlang des definierten initialen Werkzeugwegs bezüglich des Werkstücks (2) schneidet;

(c) Empfangen von Daten des Sensors (18), die Bearbeitungsverfahrensbedingungen während des Schneidens entlang des definierten initialen Werkzeugwegs darstellen;

(d) Verarbeiten der Daten des Sensors (18), um einen Wert eines Kraftparameters des Bearbeitungsverfahrens zu bestimmen; und

(e) Bewirken, dass das Schneidwerkzeug (4) entlang eines modifizierten Werkzeugwegs bezüglich des Werkstücks (2) schneidet,

wobei die Vorgänge (b) bis (e) von einem Computersystem (50) ausgeführt werden; und

das Bewirken, dass das Schneidwerkzeug entlang eines modifizierten Werkzeugwegs bezüglich des Werkstücks schneidet, die radiale Schneidtiefe während des Bearbeitens des Werkstücks ändert und gewährleistet, dass Werte des Kraftparameters des Bearbeitungsverfahrens eine Kraftbeschränkung des Bearbeitungsverfahrens nicht überschreiten.

2. Verfahren nach Anspruch 1, wobei der Kraftparameter des Bearbeitungsverfahrens die Schneidkraft des Schneidwerkzeugs (4) ist.

3. Verfahren nach Anspruch 1 oder Anspruch 2, wobei der Kraftparameter des Bearbeitungsverfahrens die Spindelleistung ist.

4. Verfahren nach einem der vorhergehenden Ansprüche, wobei der Vorgang (e) das Bewirken aufweist, dass sich das Schneidwerkzeug (4) oder das Werkstück (2) bezüglich zueinander bewegen, damit sich das Schneidwerkzeug (4) oder das Werkstück (2) in einer Richtung bewegt, die senkrecht zu der aktuellen Bewegungsrichtung ist.

5. Verfahren nach einem der vorhergehenden Ansprüche, das ferner das Erfassen eines Niveaus des Ratterns und dann das Bestimmen, ob das erfasste Ratterniveau eine festgelegte Stabilitätsbeschränkung überschreitet, aufweist.

6. Verfahren nach Anspruch 5, wobei das Schneidwerkzeug (4) entlang eines modifizierten Werkzeugwegs bezüglich des Werkstücks (2) schneidet, damit die radiale Schneidtiefe als Reaktion auf die Erfassung eines Ratterniveaus abnimmt, das die festgelegte Stabilitätsbeschränkung überschreitet.

7. Verfahren nach Anspruch 5 oder Anspruch 6, das ferner das Ersetzen des Schneidwerkzeugs (4) als Reaktion auf die Erfassung eines Ratterniveaus, das die festgelegte Stabilitätsbeschränkung überschreitet, aufweist.

8. Fräsmaschine, die Folgendes aufweist:

eine drehbare Spindel (30);

einen ersten Motor (42) zum Antreiben der Drehung der Spindel (30) ;

ein Schneidwerkzeug (4), das an der Spindel (30) befestigt ist;

einen Auflagetisch (36), wobei die Spindel (30) und der Auflagetisch(36) bezüglich zueinander bewegbar sind;

einen zweiten und dritten Motor (44 und 46) zum Bewegen der Spindel (30) und des Auflagetisches (36) bezüglich zueinander entlang einer ersten bzw. zweiten Achse;

einen oder mehrere Sensoren (18) zum Erzeugen von Rückkopplungssignalen, die Werte eines oder mehrerer Bearbeitungsverfahrensparameter darstellen; und

ein Computersystem (50), das betriebsfähig gekoppelt ist, um die Rückkopplungssignale von dem einen oder den mehreren Sensoren (18) zu empfangen und Stellgrößen an den ersten bis dritten Motor (42, 44 und 46) zu senden, wobei das Computersystem (50) programmiert ist, um die folgenden Vorgänge während der Bearbeitung eines Werkstücks (2), das an dem Auflagetisch (36) befestigt wurde, auszuführen:

(a) Steuern des zweiten und dritten Motors (44 und 46), damit das Schneidwerkzeug (4) entlang eines definierten initialen Werkzeugwegs bezüglich des Werkstücks (2) schneidet;

(b) Empfangen von Rückkopplungssignalen von dem einen oder den mehreren Sensoren (18) während des Schneidens entlang des definierten initialen Werkzeugwegs;

(c) Verarbeiten der Rückkopplungssignale, um einen Wert eines Kraftparameters des Bearbeitungsverfahrens zu bestimmen; und

(d) Steuern des zweiten und dritten Motors (44 und 46), damit das Schneidwerkzeug (4) entlang eines modifizierten Werkzeugwegs bezüglich des Werkstücks (2) schneidet, wobei der modifizierte Werkzeugweg zu Änderungen der radialen Schneidtiefe während der Bearbeitung des Werkstücks und Werten des Kraftparameters des Bearbeitungsverfahrens, die eine Kraftbeschränkung des Bearbeitungsverfahrens nicht überschreiten, führt.

9. Fräsmaschine nach Anspruch 8, wobei der Kraftparameter des Bearbeitungsverfahrens die Schneidkraft des Schneidwerkzeugs (4) ist.

10. Fräsmaschine nach Anspruch 8 oder Anspruch 9, wobei der Kraftparameter des Bearbeitungsverfahrens die Spindelleistung ist.

**11.** Verfahren nach einem der Ansprüche 8 bis 10, wobei der Vorgang (e) das Bewirken aufweist, dass sich das Schneidwerkzeug (4) oder das Werkstück (2) bezüglich zueinander bewegen, damit sich das Schneidwerkzeug (4) oder das Werkstück (2) in einer Richtung bewegt, die senkrecht zu der aktuellen Bewegungsrichtung ist.

**12.** Fräsmaschine nach einem der Ansprüche 8 bis 11, die ferner konfiguriert ist, um ein Ratterniveau zu erfassen und dann zu bestimmen, ob das erfasste Ratterniveau eine festgelegte Stabilitätsbeschränkung überschreitet.

**13.** Fräsmaschine nach Anspruch 12, wobei das Schneidwerkzeug (4) entlang eines modifizierten Werkzeugwegs bezüglich des Werkstücks (2) schneidet, damit die radiale Schneidtiefe als Reaktion auf die Erfassung eines Ratterniveaus abnimmt, das die festgelegte Stabilitätsbeschränkung überschreitet.

**Revendications**

**1.** Procédé pour usiner une pièce (2) en utilisant un outil de coupe (4) attaché à une broche (30), le procédé comprenant les étapes consistant à :

(a) définir un trajet d'outil initial de l'outil de coupe (4) par rapport à une pièce (2) en utilisant des données de définition partielle ;
(b) amener l'outil de coupe (4) à couper le long du trajet d'outil initial défini par rapport à la pièce (2) ;
(c) recevoir des données de capteur (18) représentant des conditions de processus d'usinage durant ladite coupe le long du trajet d'outil initial défini ;
(d) traiter les données de capteur (18) pour déterminer une valeur d'un paramètre de force de processus d'usinage ; et
(e) amener l'outil de coupe (4) à couper le long d'un trajet d'outil modifié par rapport à la pièce (2),

dans lequel les opérations (b) à (e) sont effectuées par un système informatique (50) ; et l'étape consistant à amener l'outil de coupe à couper le long d'un trajet d'outil modifié par rapport à la pièce change la profondeur de coupe radiale durant l'usinage de la pièce et garantit que des valeurs du paramètre de force de processus d'usinage ne dépassent pas une contrainte de force de processus d'usinage.

**2.** Procédé selon la revendication 1, dans lequel le paramètre de force de processus d'usinage est une force de coupe de l'outil de coupe (4).

**3.** Procédé selon la revendication 1 ou la revendication 2, dans lequel le paramètre de force de processus d'usinage est la puissance de broche.

**4.** Procédé selon l'une quelconque des revendications précédentes, dans lequel l'opération (e) comprend l'entraînement de l'outil de coupe (4) ou de la pièce (2) à se déplacer l'un par rapport à l'autre de sorte que l'outil de coupe (4) ou la pièce (2) se déplace dans une direction qui est perpendiculaire à une direction de mouvement actuelle.

**5.** Procédé selon l'une quelconque des revendications précédentes, comprenant en outre la détection d'un niveau de cliquetis et ensuite la détermination de si le niveau de cliquetis détecté dépasse une contrainte de stabilité spécifiée.

**6.** Procédé selon la revendication 5, dans lequel l'outil de coupe (4) coupe le long d'un trajet d'outil modifié par rapport à la pièce (2) de sorte que la profondeur de coupe radiale diminue en réponse à la détection d'un niveau de cliquetis dépassant ladite contrainte de stabilité spécifiée.

**7.** Procédé selon la revendication 5 ou la revendication 6, comprenant en outre le remplacement de l'outil de coupe (4) en réponse à la détection d'un niveau de cliquetis dépassant ladite contrainte de stabilité spécifiée.

**8.** Fraiseuse comprenant :

une broche rotative (30) ;
un premier moteur (42) pour entraîner la rotation de ladite broche (30) ;
un outil de coupe (4) attaché à ladite broche (30) ;
une table de support (36), ladite broche (30) et ladite table de support (36) étant mobiles l'une par rapport à l'autre ;
des deuxième et troisième moteurs (44 et 46) pour déplacer ladite broche (30) et ladite table de support (36) l'une par rapport à l'autre le long de premier et second axes respectivement ;
un ou plusieurs capteurs (18) pour produire des signaux de rétroaction représentant des valeurs d'un ou plusieurs paramètres de processus d'usinage ; et
un système informatique (50) couplé de manière fonctionnelle pour recevoir lesdits signaux de rétroaction depuis lesdits un ou plusieurs capteurs (18) et pour envoyer des signaux de commande auxdits premier à troisième moteurs (42, 44 et 46), dans lequel ledit système informatique (50) est programmé pour effectuer les opérations suivantes durant l'usinage d'une pièce (2) qui a été attachée à ladite table de support (36) :

(a) commander lesdits deuxième et troisième moteurs (44 et 46) de sorte que ledit outil de coupe (4) coupe le long d'un trajet d'outil initial défini par rapport à la pièce (2) ;

(b) recevoir des signaux de rétroaction depuis lesdits un ou plusieurs capteurs (18) durant la coupe le long du trajet d'outil initial défini ;

(c) traiter les signaux de rétroaction pour déterminer une valeur d'un paramètre de force de processus d'usinage ; et

(d) commander lesdits deuxième et troisième moteurs (44 et 46) de sorte que ledit outil de coupe (4) coupe le long d'un trajet d'outil modifié par rapport à la pièce (2), dans laquelle le trajet d'outil modifié donne lieu à des changements à : la profondeur de coupe radiale durant l'usinage de la pièce, et des valeurs du paramètre de force de processus d'usinage qui ne dépassent pas une contrainte de force de processus d'usinage.

9. Fraiseuse selon la revendication 8, dans laquelle le paramètre de force de processus d'usinage est une force de coupe de l'outil de coupe (4).

10. Fraiseuse selon la revendication 8 ou la revendication 9, dans laquelle le paramètre de force de processus d'usinage est la puissance de broche.

11. Fraiseuse selon l'une quelconque des revendications 8 à 10, dans laquelle l'opération (e) comprend l'entraînement de l'outil de coupe (4) ou de la pièce (2) à se déplacer l'un par rapport à l'autre de sorte que l'outil de coupe (4) ou la pièce (2) se déplace dans une direction qui est perpendiculaire à une direction de mouvement actuelle.

12. Fraiseuse selon l'une quelconque des revendications 8 à 11, comprenant en outre la détection d'un niveau de cliquetis et ensuite la détermination de si le niveau de cliquetis détecté dépasse une contrainte de stabilité spécifiée.

13. Fraiseuse selon la revendication 12, dans laquelle l'outil de coupe (4) coupe le long d'un trajet d'outil modifié par rapport à la pièce (2) de sorte que la profondeur de coupe radiale diminue en réponse à la détection d'un niveau de cliquetis dépassant ladite contrainte de stabilité spécifiée.

FIG.1

FIG.2

**FIG.3**

**FIG.4**

FIG.5A

FIG.5B

EP 2 871 547 B1

FIG.6

17

SOFTWARE PROGRAMS

22

CAD/CAM
SYSTEM

20

24

POST PROCESS

USER
INTERFACES

8

COMPUTER

10

12

CNC CONTROLLER

6

14

ADAPTIVE TOOL
PATH GENERATOR

16

MACHINING CENTER

18

SENSORS

4

CUTTING TOOL

2

WORKPIECE

FIG. 7

**FIG. 8**

204 SPECIFICATION AND DESIGN

206 MATERIAL PROCUREMENT

208 COMPONENT AND SUBASS'Y MFG.

210 SYSTEM INTEGRATION

212 CERTIFICATION AND DELIVERY

214 IN SERVICE

216 MAINTENANCE AND SERVICE

200

FIG. 9

202

AIRCRAFT

224 SYSTEMS 220

218 AIRFRAME

PROPULSION

ELECTRICAL 226

222 INTERIOR

HYDRAULIC

ENVIRON. 230

228

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1475683 A
- US 4802095 A
- US 20070179661 A
- US 20110106292 A